# FASCICULE DE BREVET EUROPEEN

(11) **EP 2 664 908 B1**
(45) Date de publication et mention de la délivrance du brevet: **06.07.2022**
(21) Numéro de dépôt: 13167726.2
(22) Date de dépôt: 14.05.2013
(51) Int. Cl.: G01M 99/00, G01N 29/04, G01M 17/00, G01N 3/34, G01N 29/30

(54) **Méthode de détection, de localisation et de diagnostic de zones défectueuses sur une face d'un vantail**
Methode zur Erfassung, Lokalisierung und Diagnose von defekten Zonen auf der Oberfläche eines Fenster- oder Türflügels
Method for detecting, locating and diagnosing defective areas on a surface of a door leaf

(30) Priorité: 16.05.2012 FR 1254542
(43) Date de publication de la demande: 20.11.2013
(73) Titulaire: Faiveley Transport, 92230 Gennevilliers (FR)
(72) Inventeur: Lemare, Jimmy, 37230 FONDETTE (FR); Brion, Florian, 37390 NOTRE DAME D'OE (FR)
(74) Mandataire: Novagraaf Technologies

(56) Documents cités:
- EP-A1- 2 216 643
- WO-A2-01/39253
- KR-A- 20110 100 754
- US-A- 3 877 295
- US-A1- 2005 097 961

## Description

L'invention concerne le contrôle non destructif de structures composites.

Par structures composites, on entend des structures formées de deux couches au moins superposées l'une par rapport à l'autre (structures dites de type sandwich).

L'invention concerne plus particulièrement une méthode non destructive de détection, de localisation et de diagnostic de défauts (ou zones défectueuses) d'un vantail d'une porte.

La méthode selon l'invention s'applique notamment mais non exclusivement à la détection de défauts peu profonds présents dans des vantaux de portes de véhicules ferroviaires.

Par défauts, on entend notamment des décollements de revêtement superficiel, des délaminages de couches superficielles ainsi que la présence de zones superficielles non homogènes.

Dans les domaines où les structures des pièces sont complexes, en particulier dans le domaine des équipements aéronautiques, ferroviaires ou automobiles, il est répandu d'avoir recours à la technique du contrôle au son (technique connue sous le terme anglais « tapping »). Cette technique du « tapping » consiste à appliquer sur la pièce contrôlée des chocs successifs dont les impacts sont répartis sur la surface à contrôler. Le son produit par ces chocs, (ou réponse vibratoire) qu'ils induisent dans la pièce permet à l'opérateur de déceler d'éventuels défauts et d'en établir la cartographie sur la pièce selon différentes techniques.

On connait de WO 01/39253 une méthode de diagnostic de zones défectueuses sur une face d'un vantail à structure sandwich, les zones défectueuses ayant été détectées et localisées sur ladite face, le vantail comprenant un cadre de profil et un garnissage, la méthode de détection et de localisation comprenant les étapes suivantes :
- segmentation de la face du vantail suivant des zones structurales distinctes dudit vantail à l'aide d'un film de protection,
- application de séries de coups sur la surface de chaque zone structurale suivant des maillages définis,
- identification de la délimitation des zones défectueuses suivant les réponses vibratoires relevées lors de l'application des coups et marquage desdites zones.

L'inconvénient de la méthode réside cependant dans la manière de procéder pour réaliser une détection et un diagnostic rapide et fiable. En outre, dans WO 01/39253, des dispositifs piézoélectriques sont typiquement incorporés dans une couche sensible pourvue d'un réseau de déclencheurs et de capteurs. Les signaux émis par les capteurs, en réponse à une déformation physique créée par un impact ou par des ondes de contraintes produites par les déclencheurs, sont illustratifs de l'état physique réel de cette couche sensible. Ceci est coûteux et impose que la couche sensible soit intégrée au vantail dont des zones défectueuses sont à diagnostiquer.

L'invention vise à remédier à ces problèmes en proposant un diagnostic de défauts rapide, performant et non destructif du vantail.

A cet effet, et selon un premier aspect, il est proposé que la segmentation de la face du vantail d'une porte de véhicule ferroviaire soit réalisée à l'aide d'un film et que la méthode de diagnostic comprenne des étapes consistant :
- à établir le ratio des surfaces des zones défectueuses marquées sur les zones structurales, par une unité de traitement d'images, à partir d'une image préalablement prise de la face du vantail portant le marquage des zones défectueuses, et
- à comparer le ratio obtenu à une valeur de seuil prédéterminée mémorisée dans l'unité de traitement d'images.

Ainsi, on évite la nécessité de capteurs physiques. Par ailleurs, la présence d'un film de protection assurant la segmentation de la face en des zones structurales définies permettra de procéder à un contrôle directement sur le vantail en situation sur le train. Le temps d'immobilisation du véhicule ferroviaire sera ainsi optimisé et les risques d'endommagement du vantail lors de son contrôle ou les opérations connexes à son contrôle seront supprimés.

Selon l'invention, on recouvre tout ou partie de la face du vantail par le film de protection apte à être marqué. Utiliser un film rapporté, et non intégré comme dans WO 01/39253, est plus pertinent. Ceci permet notamment de traiter des vantaux non initialement équipés.

De plus, le film de protection comporte des zones pré-marquées (c'est-à-dire marqués avant l'application desdites séries de coups), chacune des zones correspondant à une dite zone structurale distincte. Ainsi, l'étape de segmentation de la face du vantail peut être réalisée concomitamment avec l'étape d'application du film de protection.

Avantageusement, on fixe le film de protection de manière non permanente sur la face du vantail et, une fois la localisation des zones défectueuses et un relevé des images effectués, ledit film de protection est retiré. Le film de protection peut donc être retiré sans risquer de détériorer la face du vantail.

Avantageusement, on repositionne le film de protection. Cela a pour avantage de pouvoir réajuster si nécessaire le film de protection lors de la mise en correspondance des zones marquées du film de protection avec les zones structurales du vantail.

Avantageusement, l'étape d'application de coups comprend l'application d'une première série de coups sur la surface de chaque zone structurale correspondant au cadre de profil du vantail suivant un premier maillage et l'application d'une deuxième série de coups sur chaque zone structurale correspondant au garnissage du vantail suivant un deuxième maillage.

Avantageusement, le premier maillage est plus fin que le deuxième maillage. Plus particulièrement, et avantageusement, le premier maillage présente avantageusement un pas compris entre 20 et 30 millimètres, le deuxième maillage présentant un pas supérieur à 50 millimètres.

D'autres objets et avantages de l'invention apparaîtront au cours de la description qui suit, faite en référence aux dessins annexés, dans lesquels :
- la figure 1 illustre une vue schématique d'un vantail d'une porte de véhicule ferroviaire sur laquelle est représenté le balayage du vantail par un instrument apte à délivrer des coups ;
- la figure 2 illustre une vue du vantail de la figure 1 sur lequel les zones défectueuses ont été marquées ; et
- la figure 3 illustre une vue de détail du vantail de la figure 2.

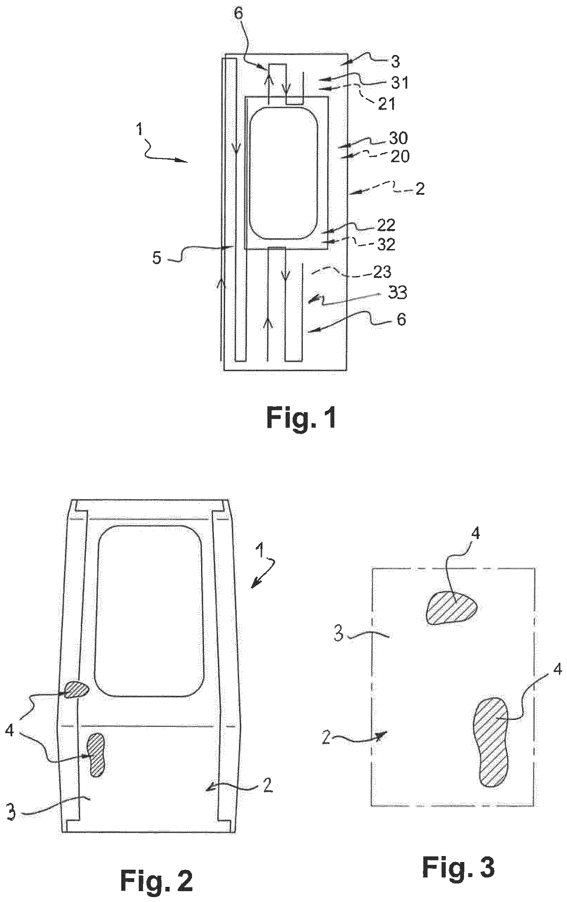

En relation avec les figures 1 à 3, il est décrit une méthode de détection et de localisation de défauts (ou zones défectueuses) sur une face 2 d'un vantail 1 à structure sandwich d'une porte de véhicule ferroviaire.

La première étape de détection et de localisation de défauts consiste en une segmentation de la face 2 du vantail 1 en des zones structurales distinctes 20, 21, 22, 23 au moyen d'un film de protection 3.

Dans le mode de réalisation décrit, le vantail 1 est segmenté en quatre zones principales distinctes : une première zone 20 correspondant au cadre de profil du vantail (appelé aussi zone de cadre), une deuxième et troisième zone 21, 23 correspondant au garnissage du vantail (appelées également zones de garnissage) et une quatrième zone 22 correspondant au cadre de baie du vantail.

Les zones structurales destinées à être contrôlées sont la zone de cadre 20 et les zones de garnissage 21, 23. Comme on le verra plus loin, la zone de cadre s'apparente à une zone dite «dure» a contrario des zones de garnissage qui s'apparentent à des zones dites «molle ».

Selon un mode de réalisation avantageux, le film de protection 3, qui se présente sous la forme d'un film unique, comporte des zones pré-marquées par exemple par des impressions. On parlera alors de zones pré-imprimées. Dans ce qui suit, on parlera indifféremment de zones pré-marquées, de zones marquées, de zones pré-imprimées ou de zones imprimées.

Le marquage de chaque zone est réalisé de telle sorte que chaque zone corresponde respectivement à une des zones structurales du vantail 1. Ainsi, dans l'exemple décrit, le film de protection 3 comporte quatre zones pré-marquées : une première zone pré-marquée 30 s'étendant le long du contour du vantail 1 et dimensionnée pour correspondre à la zone de cadre 20 du vantail ; des deuxièmes et troisièmes zones pré-marquées 31, 33, agencées et dimensionnées pour correspondre aux zones de garnissage 21, 23 ; la zone ou portion restante du film de protection 3, correspondant à la quatrième zone pré-marquées 32 et assurant la correspondance avec la zone de cadre de baies 22.

Le pré-marquage sur le film de protection 3 a pour avantage de permettre la segmentation de la face 2 du vantail 1 simultanément avec l'application du film de protection 3. Par ailleurs, et comme on le verra plus loin, la présence du pré-marquage permet de guider l'opérateur dans sa recherche des zones défectueuses. Les zones pré-marquées 30, 31, 32, 33 facilitent en outre le relevé des données par une unité de traitement d'images comme cela sera décrit également plus loin.

Avantageusement, le film de protection 3 est tel qu'il offre une fixation non permanente sur la face 2 du vantail 1. Ainsi, une fois la localisation des zones défectueuses et le relevé des images effectuées aux fins du diagnostic des défauts, le film de protection 3 peut être retiré sans risquer de détériorer la face 2 du vantail 1. En outre, il peut être prévu que le film de protection soit repositionnable. Cela a pour avantage de réajuster si nécessaire le film de protection lors de la mise en correspondance des zones marquées 30 à 33 du film de protection 3 avec les zones structurales 20 à 23 du vantail 2.

Une fois le film de protection 3 positionné sur la face 2 du vantail 1 de façon à ce que les zones pré-imprimées 30 à 33 correspondent à la zone structurelle associée, il est procédé au balayage de chacune des zones structurales à l'aide d'un instrument apte à délivrer des coups ou chocs.

Ainsi, il est appliqué une première série de coups 5 sur la surface de la première zone pré-marquée 30 correspondant au cadre de profil du vantail. S'agissant d'une surface dure, la première série de coups 5 est réalisée selon un maillage fin. Par le terme « fin », on entend un maillage dont le pas est compris entre 20 et 30 millimètres.

Une fois le balayage de la zone de profil de cadre effectué, il est appliqué une deuxième série de coups 6 sur la surface des première et deuxième zones pré-marquées 31, 33 correspondant aux zones de garnissage du vantail. S'agissant de surfaces « molles », la deuxième série de coups s6 est réalisée selon un maillage grossier. Par le terme « grossier », on entend un maillage dont le pas est supérieur à 50 millimètres.

Préalablement à l'application des coups sur le vantail, l'instrument apte à délivrer des coups sera préalablement calibré en fonction du type de chacune des zones (zones dures ou zones molles).

En fonction des réponses vibratoires relevées lors de l'application des coups sur le vantail 1, les zones défectueuses 4 sont alors relevées par marquage au crayon ou tout autre moyen équivalent comme illustré sur les figures 2 et 3.

Une fois les zones défectueuses du vantail relevées, il est procédé au diagnostic de défauts. Pour ce faire, une fois les clichés d'images de la face du vantail pris, ces derniers sont transmis, simultanément ou non à la prise de clichés, à une unité de traitement d'images laquelle va établir le ratio des surfaces des zones défectueuses marquées sur des zones structurales totales.

Pour ce faire, l'unité de traitement d'images va classifier les zones de défauts suivant les deux types de zones (zone dure et zones molles) balayées et concernées par la présence de zones défectueuses pour calculer ensuite les surfaces élémentaires et le nombres des zones défectueuses.

Le ratio sera alors comparé à une valeur de seuil prédéterminée mémorisée dans l'unité de traitement d'images et en cas de dépassement du ratio de la valeur de seuil prédéterminée, une action de réparation du vantail pourra être déclenchée. La décision de réparation pourra être établie également en fonction d'autres critères prédéterminés tel qu'une surface minimale, une surface totale, un nombre et une densité de défauts dans chacune des zones structurales. Les critères susmentionnés seront avantageusement paramétrables pour chaque type de vantail.

Dans le mode de réalisation précédemment décrit, le film de protection est formé d'un film unique. Il peut être cependant également prévu que le film soit formé à partir de la juxtaposition de feuilles aptes à être marquées, lorsque ces derniers sont apposés sur la face du vantail à tester. Il comprend alors autant de feuilles que le vantail comporte de zones structurales distinctes. Afin de faciliter la pose des feuilles sur la face du vantail, il pourra être avantageux de découper le cadre de profil en quatre sous-zones : deux zones latérales et une zone transversale supérieure et une zone transversale inférieure, les termes « supérieure », « inférieure » et « latérales » se rapportant à un vantail de porte en situation sur le train. De même que pour le film de protection unique, les feuilles constituant le film de protection seront avantageusement repositionnables et/ou permettront une fixation non permanente.

L'invention est décrite dans ce qui précède à titre d'exemple. Il est entendu que l'homme du métier est à même de réaliser différentes variantes de réalisation de l'invention sans pour autant sortir du cadre de l'invention tel que défini par les revendications.

## Revendications

1. Méthode non destructive de détection, de localisation et de diagnostic de zones défectueuses (4) sur une face d'un vantail (1) d'une porte de véhicule ferroviaire à structure sandwich, lesdits zones défectueuses étant détectées et localisées sur ladite face (2) du vantail (1), le vantail (1) comprenant un cadre de profil et un garnissage, la méthode de détection et de localisation comprenant les étapes suivantes
- segmentation de la face du vantail suivant des zones structurales (30 à 33) distinctes dudit vantail,
- application de séries de coups sur la surface de chaque zone structurale (30, 31, 33) suivant des maillages définis,
- identification de la délimitation des zones défectueuses (4) suivant les réponses vibratoires relevées lors de l'application des coups et marquage desdites zones,
**caractérisée en ce que** la segmentation de ladite face du vantail d'une porte de véhicule ferroviaire est réalisée à l'aide d'un film de protection (3) et la méthode de diagnostic comprend des étapes consistant :
- à établir le ratio des surfaces des zones défectueuses marquées sur les zones structurales, par une unité de traitement d'images, à partir d'une image préalablement prise de la face du vantail portant le marquage des zones défectueuses, et
- à comparer le ratio obtenu à une valeur de seuil prédéterminée mémorisée dans l'unité de traitement d'images,
**en ce que** lors de la détection et la localisation on recouvre tout ou partie de la face (2) du vantail (1) par le film de protection (3) apte à être marqué, **en ce que** le film de protection (3) comporte des zones pré-marquées (30 à 33), chacune des zones correspondant à une zone structurale distincte de sorte que l'étape de segmentation de la face (2) du vantail (1) est réalisée concomitamment avec l'étape d'application du film de protection (3).

2. Méthode de diagnostic selon la revendication 1 **caractérisée en ce que**, pour la détection et localisation, on fixe le film de protection (3) de manière non permanente sur la face du vantail (1) et, une fois la localisation des zones défectueuses et un relevé des images effectués, ledit film de protection est retiré.

3. -Méthode de diagnostic selon l'une quelconques des revendications 1 à 2 **caractérisée en ce que**, lors de la détection et localisation, on repositionne le film de protection (1).

4. Méthode de diagnostic selon l'une quelconques des revendications 1 à 3 **caractérisée en ce que** l'étape d'application de coups comprend l'application d'une première série de coups (5) sur la surface de chaque zone structurale (30) correspondant au cadre de profil du vantail (20) suivant un premier maillage et l'application d'une deuxième série de coups (6) sur chaque zone structurale (31, 33) correspondant au garnissage du vantail (21, 23) suivant un deuxième maillage.

5. Méthode de diagnostic selon la revendication 4 **caractérisée en ce que** le premier maillage présente un pas compris entre 20 et 30 millimètres.

6. Méthode de diagnostic selon la revendication 4 ou la revendication 5, **caractérisée en ce que** le deuxième maillage présente un pas supérieur à 50 millimètres.

7. Méthode de diagnostic selon l'une des revendications 1 à 6, **caractérisée en ce que** l'unité de traitement d'images classifie les zones de défauts suivant deux types de zones balayées et concernées par la présence des zones défectueuses et calcule ensuite les surfaces élémentaires et le nombres des zones défectueuses.

## Patentansprüche

1. Zerstörungsfreie Methode zur Erfassung, Lokalisierung und Diagnose von defekten Zonen (4) auf einer Oberfläche eines Flügels (1) einer Tür eines Eisenbahnfahrzeugs mit Sandwichstruktur, wobei die defekten Zonen auf der Oberfläche (2) des Flügels (1) geortet und lokalisiert werden, wobei der Flügel (1) einen Profilrahmen und eine Verkleidung umfasst, wobei die Methode zur Ortung und Lokalisierung folgende Schritte umfasst:
- ein Segmentieren der Oberfläche des Flügels gemäß separater struktureller Zonen (30 bis 33) des Flügels;
- ein Anwenden einer Reihe von Schlägen auf die Oberfläche jeder strukturellen Zone (30, 31, 33) gemäß definierter Maschen,
- ein Identifizieren der Umgrenzung der defekten Zonen (4) gemäß den Vibrationsantworten, die beim Anwenden der Schläge festgestellt werden, und ein Markieren der Zonen,
**dadurch gekennzeichnet, dass** das Segmentieren der Oberfläche des Flügels einer Tür eines Eisenbahnfahrzeugs mithilfe eines Schutzfilms (3) ausgeführt wird und dass die Diagnosemethode Schritte umfasst, bestehend aus:
- einem Ermitteln des Oberflächenverhältnisses der in den strukturellen Zonen markierten defekten Zonen durch eine Bildverarbeitungseinheit, ausgehend von einem zuvor von der Oberfläche des Flügels, der die Markierung der defekten Zonen trägt, gemachten Bildes, und
- einem Vergleichen des erhaltenen Verhältnisses mit einem vorgegebenen Schwellwert, der in der Bildverarbeitungseinheit gespeichert ist,
dass bei der Ortung und der Lokalisierung die Oberfläche (2) des Flügels (1) insgesamt oder teilweise von dem zur Markierung geeigneten Schutzfilm (3) bedeckt wird,
dass der Schutzfilm (3) vormarkierte Zonen (30 bis 33) umfasst, wobei jede Zone einer separaten strukturellen Zone entspricht, so dass der Schritt des Segmentierens der Oberfläche (2) des Flügels (1) gleichzeitig mit dem Schritt des Auftragens des Schutzfilms (3) ausgeführt wird.

2. Diagnosemethode nach Anspruch 1, **dadurch gekennzeichnet, dass** zur Ortung und Lokalisierung der Schutzfilm (3) auf nicht-permanente Art und Weise auf der Oberfläche des Flügels (1) befestigt wird, und nach Ausführung der Lokalisierung der defekten Zonen und der Bilderfassung der Schutzfilm entfernt wird.

3. Diagnosemethode nach einem der Ansprüche 1 bis 2, **dadurch gekennzeichnet, dass** bei der Ortung und Lokalisierung der Schutzfilm (1) repositioniert wird.

4. Diagnosemethode nach einem der Ansprüche 1 bis 3, **dadurch gekennzeichnet, dass** der Schritt des Anwendens der Schläge das Anwenden einer ersten Reihe von Schlägen (5) auf der Oberfläche jeder strukturellen Zone (30) entsprechend dem Profilrahmen des Flügels (20) gemäß einer ersten Masche und das Anwenden einer zweiten Reihe von Schlägen (6) auf jeder strukturellen Zone (31, 33) entsprechend der Verkleidung des Flügels (21, 23) gemäß einer zweiten Masche umfasst.

5. Diagnosemethode nach Anspruch 4, **dadurch gekennzeichnet, dass** die erste Masche eine Maschenweite zwischen 20 und 30 Millimetern umfasst.

6. Diagnosemethode nach Anspruch 4 oder Anspruch 5, **dadurch gekennzeichnet, dass** die zweite Masche eine Maschenweite von mehr als 50 Millimetern umfasst.

7. Diagnoseverfahren nach einem der Ansprüche 1 bis 6, **dadurch gekennzeichnet, dass** die Bildverarbeitungseinheit die Zonen mit Defekten gemäß zwei Typen von durch das Vorhandensein der defekten Zonen überstrichenen Zonen und betroffenen Zonen klassifiziert und anschließend die elementaren Oberflächen und die Anzahl der defekten Zonen berechnet.

## Claims

1. A non-destructive method for detecting, locating and diagnosing defective areas (4) on a face of a leaf (1) of a railway vehicle door with a sandwich structure, said defective areas being detected and located on said face (2) of the leaf (1), the leaf (1) comprising a profile frame and a lining, the detection and location method comprising the following steps:
- segmenting the face of the leaf into distinct structural areas (30 to 33) of said leaf,
- applying a series of blows to the surface of each structural zone (30, 31, 33) in defined grid patterns,
- identification of the delimitation of the defective zones (4) according to the vibratory responses noted during the application of the blows and marking of said zones, **characterized in that** the segmentation of said face of the leaf of a railway vehicle door is carried out with the aid of a protective film (3) and the diagnostic method comprises steps consisting of:
- establishing the ratio of the areas of the marked defective zones to the structural zones, by an image processing unit, from a previously taken image of the face of the leaf bearing the marking of the defective zones, and
- comparing the ratio obtained with a predetermined threshold value stored in the image processing unit,
**in that**, during the detection and location, all or part of the face (2) of the leaf (1) is covered by the protective film (3) suitable for being marked,
**in that** the protective film (3) comprises pre-marked zones (30 to 33), each of the zones corresponding to a distinct structural zone so that the step of segmenting the face (2) of the leaf (1) is carried out concomitantly with the step of applying the protective film (3).

2. Diagnostic method according to claim 1, **characterized in that**, for the detection and localization, the protective film (3) is fixed in a non-permanent manner on the face of the leaf (1) and, once the localization of the defective zones and a recording of the images have been carried out, said protective film is removed.

3. Diagnostic method according to any one of claims 1 to 2, **characterized in that**, during the detection and localization, the protective film (1) is repositioned.

4. Diagnostic method according to any one of claims 1 to 3, **characterized in that** the step of applying blows comprises applying a first series of blows (5) to the surface of each structural zone (30) corresponding to the profile frame of the leaf (20) according to a first mesh and applying a second series of blows (6) to each structural zone (31, 33) corresponding to the leaf lining (21, 23) according to a second mesh.

5. The diagnostic method according to claim 4, **characterized in that** the first mesh has a pitch of between 20 and 30 millimeters.

6. Diagnostic method as claimed in claim 4 or claim 5, **characterized in that** the second mesh has a pitch greater than 50 millimeters.

7. Diagnostic method according to any of claims 1 to 6, **characterized in that** the image processing unit classifies the defect areas according to two types of scanned areas affected by the presence of the defect areas and then calculates the elementary areas and the numbers of defect areas.
